Europäisches Patentamt

European Patent Office

Office européen des brevets

(11) Numéro de publication: **0 176 418**
**A1**

(19)

(12) **DEMANDE DE BREVET EUROPEEN**

(21) Numéro de dépôt: **85401738.1**

(22) Date de dépôt: **06.09.85**

(51) Int. Cl.⁴: **B 23 B 31/30**

(30) Priorité: **10.09.84 FR 8413833**

(43) Date de publication de la demande:
**02.04.86 Bulletin 86/14**

(84) Etats contractants désignés:
**DE GB IT**

(71) Demandeur: **GAMET PRECISION**
**Route d'Epégard**
**F-27110 Le Neubourg(FR)**

(72) Inventeur: **Le Moal, Jean-Pierre**
**26, Rue Ivan Tourgueneff**
**F-78380 Bougival(FR)**

(74) Mandataire: **de Boisse, Louis et al,**
**CABINET DE BOISSE 37, Avenue Franklin D. Roosevelt**
**F-75008 Paris(FR)**

(54) Vérin Hydraulique tournant.

(57) L'invention concerne un vérin hydraulique tourant fixé à l'arrière d'une broche de machine-outil pour la commande d'un dispositif de serrage.

Le cylindre (26) du vérin est formé d'un corps (30) dont la surface latérale extérieure (31) porte des moyens constituant la jante d'une poulie d'entraînement en rotation de la broche. Ces moyens peuvent être constitués par la surface du corps lui-même ou par un manchon entourant le corps. Avantageusement, le dispositif de distribution (28) du fluide de commande au cylindre constitue un palier dans lequel tourne une partie tubulaire (37) prolongeant le couvercle (36) formant avec une pièce cylindrique creuse le corps du vérin, et le dispositif de distribution est maintenu par un support (47) fixé au bâti (48) de machine.

./...

FIG.:2

## Vérin hydraulique tournant

L'invention concerne un vérin hydraulique tournant
fixé à l'arrière d'une broche de machine-outil pour
la commande d'un dispositif de serrage.

De tels vérins destinés à commander l'ouverture et la
fermeture de l'équipement de serrage d'une machine-outil
sont connus. Ils sont fixés à l'arrière de la broche de
la machine et l'effort du piston est transmis à l'organe de serrage par un tube passant au travers de la
broche. Cette disposition permet l'usinage de barres.

De nombreuses machines actuelles atteignent des vitesses de rotation de broche très élevées et l'entraînement est réalisé par un ensemble de courroies trapézoïdales, crantées ou autres permettant d'atteindre
ces hautes vitesses.

Afin d'éviter de fatiguer prématurément les roulements
qui supportent la broche, la poulie n'est pas montée directement sur celle-ci mais est supportée par ses propres roulements qui sont montés sur un support cylindrique fixé au bâti de la machine.

L'ensemble constitué par la poulie, ses roulements et les pièces de liaison entre le bâti et la broche, repousse la fixation du vérin hydraulique qui se trouve de ce fait très éloigné des roulements de la broche le supportant. Par suite des tolérances d'usinage des faces d'appui, celles-ci ne sont pas parfaitement perpendiculaires à l'axe et les contraintes engendrées lors de l'actionnement du vérin provoquent souvent des flexions dont l'amplitude dépend du porte-à-faux du vérin par rapport au bâti. Il s'ensuit des vibrations à haute vitesse néfastes à la qualité de l'usinage.

L'invention se propose de diminuer le porte-à-faux par une réalisation plus compacte du vérin et de la poulie et également par la formation d'un palier porté, maintenant l'arrière du vérin.

La présente invention fournit dans ce but un vérin hydraulique tournant monté à une extrémité de la broche d'une machine-outil pour la commande d'un dispositif de serrage prévu à l'autre extrémité de la broche, la broche étant entraînée en rotation par l'intermédiaire d'une poulie et le vérin tournant avec la broche, ledit vérin comportant un cylindre partagé en deux chambres par un piston traversé coaxialement par une tige ou tube de piston transmettant le mouvement au dispositif de serrage, les chambres étant alimentées par un dispositif de distribution du fluide de commande coaxial à une partie du tube de piston et susceptible d'être maintenu immobile par rapport au cylindre, caractérisé en ce que le cylindre est formé d'un corps dont la surface latérale extérieure, coaxiale au tube de piston porte des moyens constituant la jante d'une poulie d'entraînement en rotation de la broche.

Suivant une modalité avantageuse, les moyens constituant la jante sont constitués par la surface extérieure du corps du cylindre. Ils peuvent aussi être constitués par un manchon recouvrant au moins partiellement le corps du cylindre.

De préférence, le corps du cylindre est formé d'une pièce cylindrique creuse fermée à une extrémité par un fond présentant un alésage coaxial et d'un couvercle présentant un alésage coaxial à celui du fond, prolongé à l'extérieur par une partie tubulaire recouvrant au moins partiellement le tube de piston, et la partie tubulaire forme avec le dispositif de distribution un dispositif tournant de connexion hydraulique.

De préférence également, le dispositif de distribution est maintenu dans un support solidaire du bâti de machine et constitue un palier supportant le cylindre faisant office de poulie d'entraînement.

Les explications et figures données ci-après à titre d'exemple permettront de comprendre comment l'invention peut être réalisée.

La figure 1 représente la disposition actuelle du vérin et de la poulie sur une broche de machine-outil.

La figure 2 représente le vérin hydraulique selon l'invention.

La figure 3 représente une forme de réalisation du support de palier du vérin.

La figure 4 est une vue schématique d'une forme de réalisation de la poulie d'entraînement conforme à l'invention.

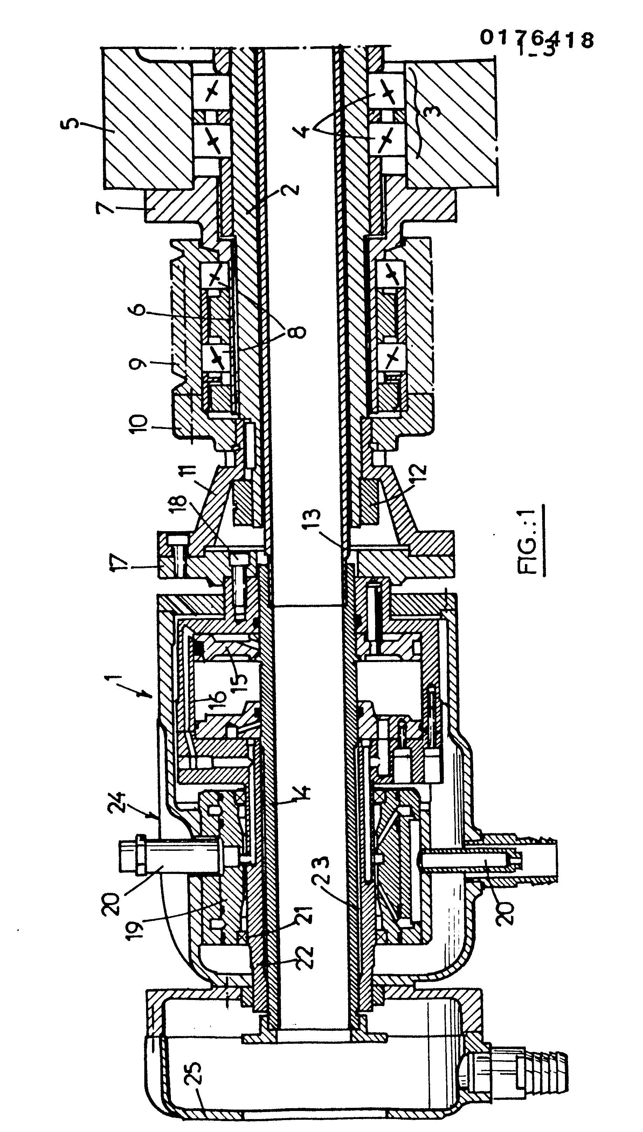

La figure 1 montre un vérin hydraulique tournant 1 classique fixé sur la broche 2 d'une machine-outil.

La broche 2 est maintenue dans son palier 3 formé de deux roulements 4 logés dans le bâti 5. La broche traverse le support cylindrique de poulie 6 fixé au bâti par une collerette 7. Le support maintient les roulements 8 qui supportent la poulie 9.

A l'extrémité de la poulie est fixé le couvercle de poulie 10 qui transmet le mouvement à la broche sur laquelle il est claveté. L'extrémité de la broche, dépassant du couvercle de poulie 10 reçoit un adaptateur de vérin hydraulique 11 qui lui est fixé par un écrou de maintien 12. A l'intérieur de la broche est logé un tube de transmission 13 qui transmet les mouvements du piston du vérin aux organes de serrage. Une extrémité de ce tube est solidarisée avec le tube 14 formant la tige du piston 15 du vérin hydraulique. Le piston partage le cylindre 16 en deux chambres alimentées en fluide hydraulique par un dispositif de distribution. Le cylindre 16 est fixé à une bride de montage 17 par des boulons 18 et est ainsi entraîné en rotation avec le piston 15. Le dispositif de distrition 19 porte les canalisations d'admission et de vidange 20 du fluide alimentant les chambres du cylindre 16. Ce dispositif est monté, par l'intermédiaire de roulements 21, sur un manchon 22 coopérant par un accouplement coulissant 23 avec la tige de vérin 14.

Cet accouplement permet le déplacement longitudinal de la tige de vérin 14. Un capot 24 est fixé sur le dispositif de distribution et recouvre au moins partiellement le cylindre tournant 16. Un dispositif de récupération du fluide de coupe 25 est fixé à l'extrémité du dispositif de distribution 19.

Comme il est aisé de le voir sur la figure 1 représentant l'art antérieur, le vérin hydraulique est très éloigné du bâti de la machine et en porte-à-faux, ce qui crée lors du fonctionnement des forces tendant à produire un décentrage du cylindre et la création et l'entretien de vibrations nuisibles à l'usinage.

L'invention consiste à utiliser la surface extérieure du cylindre comme poulie, et à supporter l'arrière du vérin dans un palier rendu solidaire du bâti de la machine. Ces caractéristiques permettent d'obtenir une construction plus compacte par la suppression de la poulie traditionnelle et d'éviter les déformations dues à l'entraînement de la poulie et aux efforts longitudinaux exercés par le vérin.

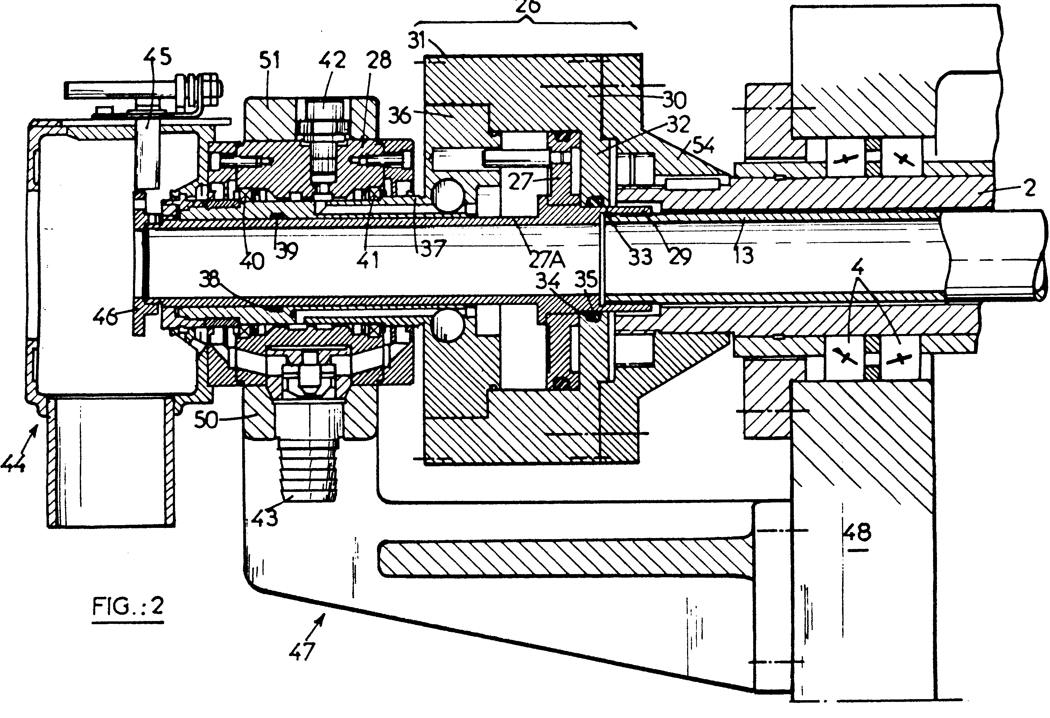

La figure 2 représente, vue en coupe, un vérin selon l'invention. Il est constitué d'un cylindre 26 dans lequel est susceptible de coulisser un piston 27 qui le partage en deux chambres qui sont alimentées par un dispositif de distribution 28 du fluide de commande. Le piston 27 est traversé coaxialement par un tube de piston 27A dont une extrémité 29 est susceptible de coopérer avec un tube de transmission 13 passant dans l'alésage de la broche 2 et commandant les organes de serrage (non représentés). Le cylindre 26 est constitué d'un corps 30 présentant une surface latérale extérieure 31, cylindrique coaxiale au tube de piston 27A,

donc à la broche de la machine-outil. Cette surface 31 comporte des moyens constituant au moins partiellement la jante de la poulie d'entraînement en rotation de la broche. Selon l'exemple de réalisation représenté, le corps 30 du cylindre est formé d'une pièce cylindrique creuse fermée à une extrémité par un fond 32 présentant un alésage coaxial 33 comportant une gorge annulaire 34 dans laquelle est logé un joint torique 35 assurant l'étanchéité avec la surface extérieure de l'extrémité 29 du tube de piston 27A. L'autre extrémité de la pièce cylindrique est fermée par un couvercle 36 présentant un alésage coaxial à celui du fond 32, prolongé vers l'extérieur par une partie tubulaire 37 recouvrant au moins partiellement le tube de piston 27A.

L'alésage de la partie tubulaire 37 comporte une gorge annulaire 38 maintenant un joint torique 39 assurant l'étanchéité avec le tube de piston 27A et permettant au moins le déplacement axial de ce dernier.

La surface extérieure de la partie tubulaire 37 forme, avec le dispositif de distribution 28, un dispositif tournant de connexion hydraulique. Le dispositif d'accouplement est constitué, selon l'exemple de réalisation, de deux roulements 40, 41 dont les bagues intérieures sont fixées sur la surface extérieure de la partie tubulaire 37 du couvercle 36 et les bagues extérieures dans l'alésage du dispositif de distribution 28 qui forme ainsi un palier arrière pour la poulie formée par le corps 31 du cylindre 26.

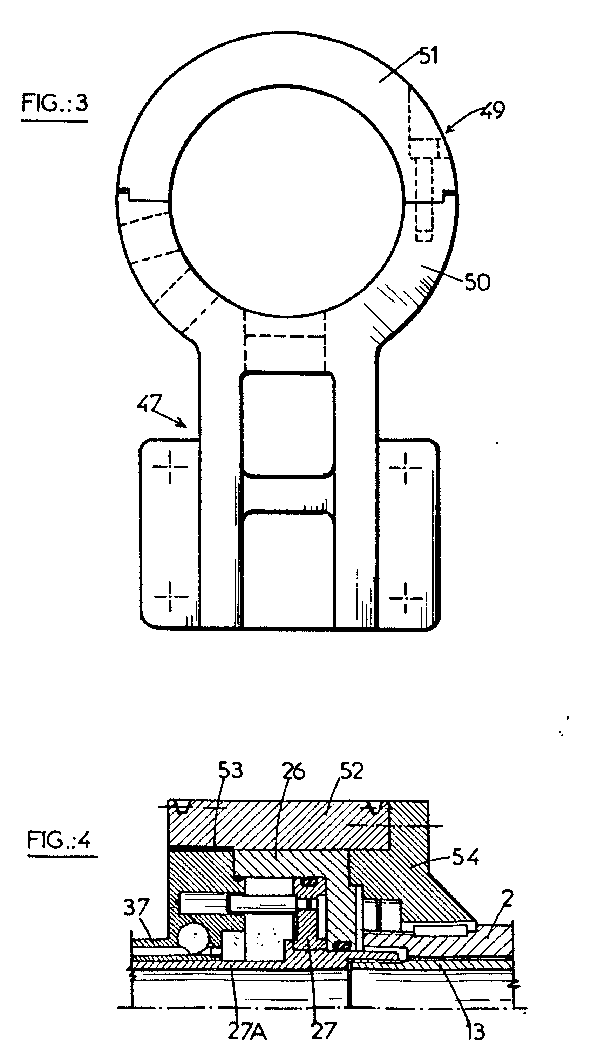

Comme montré sur la figure 2, le dispositif de distribution comporte de manière connue les raccords 42 et 43 d'admission et de vidange du fluide de commande du vérin. Egalement de manière connue, le dispositif de distribution supporte le dispositif de récupération 44 du fluide de coupe, dans lequel sont montés des détecteurs de proximité 45 contrôlant la position du piston 27 par l'intermédiaire d'une collerette 46 prévue à l'extrémité du tube de piston 27A. Le dispositif de distribution est maintenu par un support 47 (figure 3) fixé au bâti 48 de la machine. Ce support se présente sous l'aspect d'une console dont l'extrémité coopérant avec la surface latérale du dispositif de distribution se présente sous forme d'un collier 49 en deux parties 50, 51, permettant le démontage éventuel du vérin.

Selon une autre forme de réalisation de la poulie 31 formée sur le corps du cylindre 26, montrée figure 4, la jante de la poulie est constituée d'un manchon 52 présentant éventuellement sur sa surface intérieure un épaulement 53, maintenu en place par l'adaptateur de vérin 54 recouvrant au moins partiellement le corps du cylindre et claveté sur la broche 2.

La tension des courroies est supportée à la fois par les roulements arrière de la broche 2, et par les roulements 40, 41 du vérin tournant qui forment un palier supporté par le bâti 48 de la machine. Ce palier supprime les flexions consécutives aux contraintes de l'effort du piston en maintenant fermement l'arrière du vérin.

Les vibrations disparaissent et l'ensemble est beaucoup moins encombrant.

REVENDICATIONS DE BREVET

1. Vérin hydraulique tournant monté à une extrémité de la broche d'une machine-outil pour la commande d'un dispositif de serrage prévu à l'autre extrémité de la broche (2), la broche étant entraînée en rotation par l'intermédiaire d'une poulie et le vérin tournant avec la broche, ledit vérin comportant un cylindre (26) partagé en deux chambres par un piston (27) traversé coaxialement par une tige ou tube de piston (27A) transmettant le mouvement au dispositif de serrage, les chambres étant alimentées par un dispositif (28) de distribution du fluide de commande coaxial à une partie du tube de piston et susceptible d'être maintenu immobile par rapport au cylindre, caractérisé en ce que le cylindre (26) est formé d'un corps (30) dont la surface latérale extérieure (31), coaxiale au tube de piston (27A) porte des moyens constituant la jante d'une poulie d'entraînement en rotation de la broche.

2. Vérin selon la revendication 1, caractérisé en ce que les moyens constituant la jante sont formés par la surface latérale extérieure (31) du corps (30) du cylindre (26).

3. Vérin selon la revendication 1, caractérisé en ce que les moyens constituant la jante sont constitués d'un manchon (52) recouvrant au moins partiellement le corps (30) du cylindre (26).

4. Vérin selon l'une des revendications 1 ou 3, caractérisé en ce que le corps (30) du cylindre est formé d'une pièce cylindrique creuse fermée à une extrémité par un fond (32) présentant un alésage (33) coaxial et d'un couvercle (36) présentant un alésage coaxial à celui du fond (32), prolongé à l'extérieur par une

2

0176418

partie tubulaire (37) recouvrant au moins partiellement le tube de piston (27A), et en ce que la partie tubulaire (37) forme avec le dispositif de distribution (28) un dispositif tournant de connexion hydraulique.

5. Vérin selon l'une des revendications 1 à 4, caractérisé en ce que le dispositif de distribution (28) est maintenu dans un support (47) solidaire du bâti (48) de machine et constitue un palier supportant le cylindre (26) faisant office de poulie d'entraînement.

0176418

FIG.:1

FIG.:2

2.3

0176418

0176418

3 — 3

FIG.:3

51

49

50

47

FIG.:4

53  26  52

54

37

2

27A  27  13

**0176418**

Office européen
des brevets

**RAPPORT DE RECHERCHE EUROPEENNE**

Numero de la demande

EP  85 40 1738

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | FR-A-2 155 037  (SOCIETE D'ELECTRICITE MORS) <br> * Page 4, ligne 27 - page 5, lignes 9,19-21; figures 1,6 * | 1 | B 23 B  31/30 |
| A | CH-A- 223 584  (PITTLER) <br> * Figure 1 * | 1-5 | |
| A | US-A-1 939 788  (OLSON) | | |

| | | | DOMAINES TECHNIQUES RECHERCHES (Int. Cl.4) |
|---|---|---|---|
| | | | B 23 B |

Le présent rapport de recherche a été établi pour toutes les revendications

| Lieu de la recherche | Date d'achèvement de la recherche | Examineieur |
|---|---|---|
| LA HAYE | 24-10-1985 | HUGGINS J.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82